# EUROPÄISCHE PATENTSCHRIFT

(11) **EP 0 760 310 B1**
(45) Veröffentlichungstag und Bekanntmachung des Hinweises auf die Patenterteilung: **08.11.2000**
(21) Anmeldenummer: 96113132.3
(22) Anmeldetag: 16.08.1996
(51) Int. Cl.: B60P 3/36, B60R 7/04

(54) **Wohnwagen**
Caravan
Caravane

(30) Priorität: 26.08.1995 DE 29513761 U
(43) Veröffentlichungstag der Anmeldung: 05.03.1997
(73) Patentinhaber: DETHLEFFS GmbH, D-88316 Isny (DE)
(72) Erfinder: Schmidt, Gerhard, D-88 Isny/Allgäu (DE)
(74) Vertreter: Patentanwälte Eisele, Otten, Roth & Dobler

(56) Entgegenhaltungen:
- FR-A- 2 397 175
- GB-A- 1 604 055
- US-A- 2 867 471

## Beschreibung

Die Erfindung bezieht sich auf einen Wohnwagen mit wenigstens einer Sitzbank, unter der ein Stauraum ausgebildet ist.

Es ist bekannt, Stautruhen als Wohnwagen-Sitzbänke zu nutzen und den Hohlraum dadurch zugänglich zu machen, daß die Sitzflächen als Klappdeckel ausgebildet sind. Der Zugang ist aber beschwerlich. Vor dem Aufklappen der Deckel müssen die Sitzpolster abgenommen werden. Wenn sich vor der Sitzbank ein Tisch befindet, kann man außerdem an die geöffnete Truhe nicht mittig herantreten.

Zur Beseitigung dieser Schwierigkeit und zur optimalen Nutzung des Sitzbank-Stauraumes wird erfindungsgemäß vorgeschlagen, daß die Truhe beziehungsweise ein truhenartiges Sitzbank-Untergestell an einer zugänglichen Stirnseite offen ausgebildet ist und mehrere durch die Öffnung einschiebbare, koppelbare Boxen vorgesehen sind, die dem freien Querschnitt des Untergestells angepaßt und insgesamt nicht länger als dieses sind, wobei die Boxen, einzeln oder zusammen, nacheinander in der Bewegungsrichtung angeordnet sind bzw. aufeinanderfolgend verstaut sind oder bewegt werden. Dadurch ist der Zugang zum Stauraum wesentlich vereinfacht, da die Boxen ungehindert herausgezogen werden können und der Inhalt dann frontal zugänglich ist.

Meist ist es in Wohnwagen eng. Eine Box, die sich über die gesamte Länge der Sitzbank erstreckt, könnte deshalb nur teilweise herausgezogen werden. Deshalb ist vorgesehen, daß die Sitzbank ein truhenartiges, an einer zugänglichen Stirnseite offen ausgebildetes Untergestell aufweist und mehrere, durch die Öffnung einschiebbare, koppelbare Boxen vorgesehen sind, die dem freien Querschnitt des Untergestells angepaßt und insgesamt nicht länger als dieses sind, wobei die Boxen, einzeln oder zusammen, nacheinander in der Bewegungsrichtung angeordnet sind bzw. aufeinanderfolgend verstaut sind oder bewegt werden. Es werden demzufolge mehrere kleinere Boxen verwendet und diese koppelbar gestaltet, so daß beim Herausziehen der ersten Box die weiteren folgen, die erste Box aber abgekoppelt und zur Seite gestellt werden kann, bevor man die weiteren Boxen herauszieht. Ein anderer Vorteil ist dadurch gegeben, daß die in den Boxen enthaltenen Gegenstände vielfach in den Boxen transportiert und außerhalb des Wohnwagens verwendet werden können.

Die Boxen können einfache Holzkisten sein. Sie lassen sich dem vorhandenen Stauraum am besten anpassen, weil sie in unterschiedlicher Tiefe gefertigt werden können, so daß sie insgesamt auch die ganze Länge des Stauraums ausfüllen. Andererseits lassen sich aber auch marktgängige Kunststoffboxen verwenden. Zur leichten Kopplung können an den benachbarten Seitenwänden der Boxen Schlitze beziehungsweise in diese einhängbare Haken angebracht sein. Andererseits kann auch ein Haken über den Rand der benachbarten Box greifen oder die Boxen können mit Hilfe von Bändern oder Laschen, an denen Druckknöpfe angebracht sind, zusammengehängt werden.

Anhand der Zeichnung wird die Erfindung beispielhaft erläutert. Es zeigt
- Fig. 1: einen Teil eines Wohnwagengrundrisses und
- Fig. 2: einen Schnitt II-II einer der Sitzbänke nach Fig. 1

An einer der beiden Längsseitenwände 1 eines Wohnwagens sind ein Tisch 2 und zwei Sitzbänke 3 und 4 jeweils senkrecht zur Wand angeordnet. An der gegenüberliegenden Längsseitenwand befindet sich eine Schrankanordnung 5, so daß zwischen den Sitzbänken 3 und 4 und den Fronten der Schränke nur ein schmaler freier Durchgang verbleibt. Diese Stirnseiten der im übrigen kastenartigen Sitzbank-Untergestelle sind offen.

Durch diese Öffnungen können oben offene Boxen 6, 7 und 8 unter die Sitzflächen geschoben werden. Die genannten Boxen sind speziell so bemessen, daß sie insgesamt die ganze Tiefe des unter den Sitzflächen befindlichen Stauraumes ausfüllen. Sie können unterschiedliche Größe haben. Bei der Sitzbank 3 sind die Boxen in ihrer eingeschobenen Stellung gestrichelt angedeutet. Durch die Verwendung mehrerer voneinander getrennter Boxen stört es nicht, daß vor der stirnseitigen Öffnung des Sitzbank-Untergestells nur wenig Platz vorhanden ist.

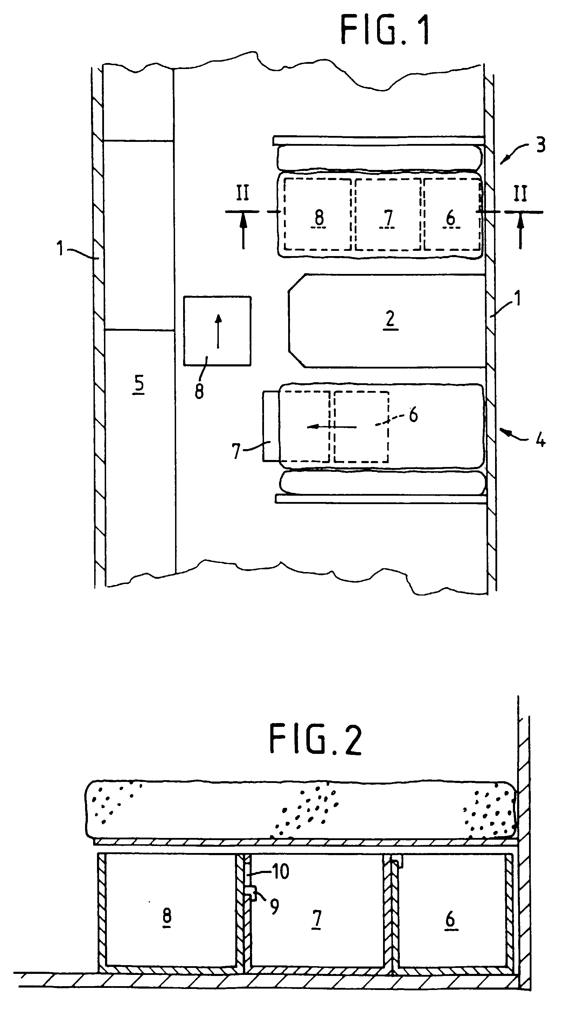

Das Einschieben und Herausziehen der Boxen verläuft wie folgt: Wenn beim Hineinschieben die erste Box 6 noch nicht ganz unter der Sitzbank verschwunden ist, verbindet man diese mit der zweiten Box 7 und schiebt weiter bis Platz ist, um auch die dritte Box 8 mit der zweiten zu verbinden und dann alle unter die Bank zu schieben. Umgekehrt zieht man zunächst die äußere Box 8 heraus, hängt sie von der Box 7 ab und stellt sie zur Seite. Diese Situation ist in Fig. 1 bei der Sitzbank 4 gezeigt. Dann wird die Box 7 herausgezogen und von der letzten Box abgehängt, so daß auch diese schließlich herausgezogen werden kann.

In der Fig. 2 sind die drei Boxen 6, 7, 8 mit der darüber befindlichen Sitzbank 3 in einem schematischen Schnittbild gezeigt. Die Box 7 hat an der zur Box 8 gewandten Seitenwand einen vertikalen Schlitz 10. Durch diesen ragt ein an der gegenüberliegenden Seitenwand der Box 8 befestigter Haken 9. Zum Entkoppeln muß somit die Box 8 nur leicht angehoben und dann weggezogen werden. Bei der ähnlichen Koppelanordnung zwischen den Boxen 6 und 7 greift der Haken in einen nach oben randoffenen Schlitz der Seitenwand der Box 6 ein. Auch dies ist nur ein Beispiel von vielen anderen mehr oder weniger komfortablen Koppelvorrichtungen.

## Patentansprüche

1. Wohnwagen mit wenigstens einer Sitzbank, unter der ein Stauraum ausgebildet ist, dadurch gekennzeichnet, daß die Sitzbank (3, 4) ein truhenartiges, an einer zugänglichen Stirnseite offen ausgebildetes Untergestell aufweist und mehrere, durch die Öffnung einschiebbare, koppelbare Boxen (6, 7, 8) vorgesehen sind, die dem freien Querschnitt des Untergestells angepaßt und insgesamt nicht länger als dieses sind, wobei die Boxen, einzeln oder zusammen, nacheinander in der Bewegungsrichtung angeordnet sind bzw. aufeinanderfolgend verstaut sind oder bewegt werden.

2. Wohnwagen nach Anspruch 1, dadurch gekennzeichnet, daß die Boxen (6, 7, 8) oben offen sind.

3. Wohnwagen nach Anspruch 2, dadurch gekennzeichnet, daß die Boxen Holzkisten sind.

4. Wohnwagen nach Anspruch 2, dadurch gekennzeichnet, daß die Boxen marktgängige Kunststoffboxen sind.

5. Wohnwagen nach Anspruch 1, dadurch gekennzeichnet, daß die Boxen an den benachbarten Seitenwänden miteinander in Eingriff bringbare Schlitze (10) beziehungsweise Haken (9) aufweisen.

6. Wohnwagen nach Anspruch 1, dadurch gekennzeichnet, daß die Boxen mittels flexibler Laschen mit Druckknopfbefestigung koppelbar sind.

## Claims

1. Caravan with at least one bench-seat, beneath which is formed a storage space, characterised in that the bench-seat (3, 4) has a chest-like supporting frame which is open at an accessible end face and a plurality of boxes (6, 7, 8) are provided which can be joined and inserted through the opening and are adapted to the open cross-section of the supporting frame and, overall, are no longer than this supporting frame, the boxes, individually or together, being arranged in succession in the direction of movement and being stored or moved one after the other.

2. Caravan according to claim 1, characterised in that the boxes (6, 7, 8) are open at the top.

3. Caravan according to claim 2, characterised in that the boxes are wooden cases.

4. Caravan according to claim 2, characterised in that the boxes are commercial plastic boxes.

5. Caravan according to claim 1, characterised in that the boxes have slots (10) or hooks (9) which can be brought into engagement with one another at the adjoining side walls.

6. Caravan according to claim 1, characterised in that the boxes can be joined by means of flexible tongues with press-button fastening.

## Revendications

1. Caravane comportant au moins une banquette sous laquelle se trouve un volume de rangement,
caractérisée en ce que
la banquette (3, 4) comporte un châssis en forme de coffre, ouvert par un côté accessible et plusieurs boîtes (6, 7, 8) susceptibles d'être couplées et qui s'introduisent à travers l'ouverture, ces boîtes étant adaptées à la section libre du châssis et pas globalement plus longues que celui-ci, les boîtes étant disposées séparément ou en bloc, successivement dans la direction de déplacement, ou arrimées ou déplacées l'une à la suite de l'autre.

2. Caravane selon la revendication 1,
caractérisée en ce que
le dessus des boîtes (6, 7, 8) est ouvert.

3. Caravane selon la revendication 2,
caractérisée en ce que
les boîtes sont des caisses en bois.

4. Caravane selon la revendication 2,
caractérisée en ce que
les boîtes sont des boîtes en matière plastique du commerce.

5. Caravane selon la revendication 1,
caractérisée en ce que
les boîtes comportent sur leurs parois latérales voisines, des fentes (10) ou des crochets (9) qui peuvent être mis en prise les uns avec les autres.

6. Caravane selon la revendication 1,
caractérisée en ce que
les boîtes peuvent être couplées par des pattes souples avec fixation par bouton-pression.
